# EUROPÄISCHE PATENTSCHRIFT

(11) **EP 2 579 666 B1**
(45) Veröffentlichungstag und Bekanntmachung des Hinweises auf die Patenterteilung: **19.10.2016**
(21) Anmeldenummer: 12194487.0
(22) Anmeldetag: 15.02.2000
(51) Int. Cl.: H04W 72/10

(54) **Vergabe von Zugriffsrechten auf einen Telekommunikationskanal an Teilnehmerstationen eines Telekommunikationsnetzes**
Allocation of access rights for a telecommunications channel to subscriber stations of a telecommunications network
Allocation de droits d'accès pour un canal de télécommunications à des stations d'utilisateur d'un réseau de télécommunications

(30) Priorität: 08.03.1999 DE 19910239
(43) Veröffentlichungstag der Anmeldung: 10.04.2013
(62) Teilanmeldung aus: 10002773.9
(73) Patentinhaber: IPCom GmbH & Co. KG, 82049 Pullach (DE)
(72) Erfinder: Fischer, Ralf, 31199 Diekholzen (DE); Hans, Martin, 31162 Bad Salzdetfurth (DE); Kowalewski, Dr. Frank, 37085 Göttingen (DE); Laumen, Josef, 85375 Neufahrn (DE); Schmidt, Gunnar, 78052 Villingen-Schwenningen (DE); Lechner, Detlef, 12101 Berlin-Tempelhof (DE); Schulz, Holger, 10587 Berlin (DE)
(74) Vertreter: Molnia, David

(56) Entgegenhaltungen:
- WO-A-97/19525
- US-A- 4 707 832
- "Digital cellular telecommunications system (Phase 2+); General Packet Radio Service (GPRS); Mobile Station (MS) - Base Station System (BSS) interface; Radio Link Control/ Medium Access Control (RLC/MAC) protocol (GSM 04.60 version 6.2.0 Release 1997)", 3GPP STANDARD; GSM 04.60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V6.2.0, 1. Oktober 1998 (1998-10-01), Seiten 1-181, XP050358536,
- "Digital cellular telecommunications system (Phase 2+); Service accessibility (GSM 02.11 version 6.0.0 Release 1997); TS 100 921", IEEE, LIS, SOPHIA ANTIPOLIS CEDEX, FRANCE, Bd. 3-SA1;SMG1, Nr. V6.0.0, 1. Juli 1998 (1998-07-01), XP014029296, ISSN: 0000-0001

## Beschreibung

Die Erfindung geht von einem Verfahren zum Ermitteln einer Zugriffsberechtigung auf mindestens einen Telekommunikationskanal, bzw einer Teilnehmerstation und einem Telekommunikationssystem gemäß den unabhängigen Ansprüche aus.

Aus der nicht vorveröffentlichten deutschen Patentanmeldung DE198 38832 A1 ist bereits ein Verfahren zur Zugriffskontrolle auf einen Telekommunikationskanal eines Telekommunikationsnetzes für mindestens eine Teilnehmerstation des Telekommunikationsnetzes bekannt, wobei Informationssignale an die mindestens eine Teilnehmerstation übertragen werden.

Die GSM 04.60 V6.2.0 (1998-10) offenbart ein Verfahren zur Zugangsberechtigung mehrerer Mobilstationen zu einem Mobilfunktelekommunikationsnetz in Abhängigkeit von Nutzerklassen und zu einem Telekommunikationskanal des Mobilfunknetzes in Abhängigkeit eines Persistenzschwellwertes.

Die GSM 02.11 V.6.0.0 (1998-07) offenbart weitere Informationen zu Nutzerklassen und entsprechenden Kanalzugangsberechtigungen von Mobilstationen.

Die GSM 04.60 V6.2.0 (1998-10) beschreibt die Vergabe von Zugriffsrechten auf mindestens einen Telekommunikationskanal eines Telekommunikationsnetzes an mindestens eine Teilnehmerstation, wobei Informationssignale mit Zugriffsberechtigungsdaten an die Teilnehmerstation übertragen werden. Die Teilnehmerstation prüft, ob die Zugriffsberechtigungsdaten einen Zugriffsschwellwert umfassen, und vergleicht diesen mit einer Zufallszahl, wobei das Zugriffsrecht auf einen Telekommunikationskanal in Abhängigkeit vom Vergleichsergebnis zugeteilt wird.

Das Dokument CEPT/CCH/GSM/L1 EG WP3 138/(87): "Minutes of the L1EG meeting" ist ein Sitzungsprotokoll einer Expertengruppe, die vom 31. August - 2. September 1987 tagte und einen neuen Telekommunikationsstandard zu entwerfen hatte. Dieses Dokument erwägt in Anhang 5, dass es Gruppen oder Dienste geben könnte, die einen bevorzugten Zugriff auf ein Telekommunikationssystem erhalten sollen.

### Vorteile der Erfindung

Die erfindungsgemäße Mobilstation, die erfindungsgemäße Teilnehmerstation, und das erfindungsgemäße Telekommunikationssystem mit den Merkmalen der unabhängigen Ansprüche haben demgegenüber den Vorteil, dass mit den Informationssignalen Zugriffsberechtigungsdaten zur mindestens einen Teilnehmerstation übertragen werden, dass bei Empfang der Zugriffsberechtigungsdaten in einer Auswerteeinheit der mindestens einen Teilnehmerstation geprüft wird, ob die Zugriffsberechtigungsdaten einen Zugriffsschwellwert umfassen, wobei der Zugriffsschwellwert mit einer Zufallszahl oder einer Pseudozufallszahl verglichen wird, und dass das Zugriffsrecht auf einen Telekommunikationskanal der mindestens einen Teilnehmerstation in Abhängigkeit des Vergleichsergebnisses, vorzugsweise unter der Bedingung, dass die Zufallszahl oder die Pseudozufallszahl größer oder gleich dem Zugriffsschwellwert ist, zugeteilt wird. Vorteilhaft ist, wenn auf diese Weise eine zufällige Verteilung der Zugangsberechtigung zu diesem Telekommunikationskanal für eine oder mehrere Teilnehmerstationen realisiert wird. Diese Zugriffskontrolle nimmt ein Minimum an Übertragungskapazität für die Übertragung der Informationssignale in Anspruch, da sie lediglich durch Übertragung des Zugriffsschwellwertes bewirkt wird.

Durch die in den Unteransprüchen aufgeführten Maßnahmen sind vorteilhafte Weiterbildungen und Verbesserungen des im unabhängigen Anspruch 1 angegebenen Verfahrens möglich.

Besonders vorteilhaft ist es, dass in der Auswerteeinheit der mindestens einen Teilnehmerstation geprüft wird, ob die Zugriffsberechtigungsdaten Zugriffsberechtigungsinformationen mit Zugriffsklasseninformationen für mindestens eine vorgegebene Nutzerklasse umfassen, wobei in diesem Fall und unter der Voraussetzung, dass die mindestens eine Teilnehmerstation der mindestens einen vorgegebenen Nutzerklasse zugeordnet ist, der Zugriff auf einen Telekommunikationskanal der mindestens einen Teilnehmerstation in Abhängigkeit des Zugriffsklasseninformation für diese Nutzerklasse erteilt wird. Auf diese Weise können Teilnehmerstationen einer vorgegebenen Nutzerklasse selbst dann zur Nutzung des Telekommunikationskanals zugelassen werden, wenn sie aufgrund der zufälligen Verteilung mittels Zugriffsschwellwert nicht zum Zugriff auf diesen Telekommunikationskanal berechtigt wären. So können beispielsweise Teilnehmerstationen von Notdiensten, wie der Polizei oder der Feuerwehr einer solchen vorgegebenen Nutzerklasse zugeordnet sein, die dann unabhängig von der zufälligen Verteilung durch entsprechende Zugriffsschwellwertinformationen priorisiert auf den Telekommunikationskanal zugreifen können.

Ein weiterer, jedoch nicht mehr mit den erteilten Ansprüchen beanspruchter Vorteil besteht darin, dass in der Auswerteeinheit der mindestens einen Teilnehmerstation geprüft wird, ob die Zugriffsberechtigungsdaten Prioritätsinformationen in Form eines Prioritätsschwellwertes umfassen, wobei in diesem Fall und unter der Voraussetzung, dass die mindestens eine Teilnehmerstation einer Prioritätsklasse mit einem Prioritätswert zugeordnet ist, der Prioritätswert mit dem Prioritätsschwellwert verglichen wird, und der Zugriff auf einen Telekommunikationskanal der mindestens einen Teilnehmerstation in Abhängigkeit des Vergleichsergebnisses, vorzugsweise unter der Bedingung, dass der Prioritätswert größer oder gleich dem Prioritätsschwellwert ist, erteilt wird. Auf diese Weise kann unter den zufällig für den Zugriff auf diesen Telekommunikationskanal berechtigten Teilnehmerstationen zusätzlich eine weitere Auswahl getroffen werden, die Teilnehmerstationen höherer Priorität für den Zugriff auf diesen Telekommunikationskanal bevorzugt. Auch auf diese Weise können Teilnehmerstationen von Notdiensten, wie der Polizei oder der Feuerwehr priorisiert werden, allerdings in Abhängigkeit der zufälligen Verteilung mittels Zugriffsschwellwert.

Ein weiterer, jedoch nicht mehr mit den erteilten Ansprüchen beanspruchter Vorteil, besteht darin, dass in der Auswerteeinheit der mindestens einen Teilnehmerstation geprüft wird, ob die Zugriffsberechtigungsdaten Teilnehmerdiensteinformationen umfassen, die für vom Telekommunikationsnetz angebotene Telekommunikationsdienste angeben, ob der Zugriff auf einen Telekommunikationskanal für die Anforderung eines solchen Telekommunikationsdienstes freigegeben ist. Für jede der nach den oben genannten Kriterien zugriffsberechtigten Nutzerklassen wird zusätzlich festgelegt, welche Telekommunikationsdienste über den Telekommunikationskanal angefordert werden können. Auf diese Weise wird wiederum Übertragungskapazität für die Übertragung der Informationssignale eingespart, da nicht von verschiedenen - nach den obigen Kriterien - zugriffsberechtigten Nutzerklassen unterschiedliche Telekommunikationsdienste angefordert werden können, sondern für jede dieser vorausgewählten Teilnehmerstationen lediglich die spezifizierten Telekommunikationsdienste über diesen Telekommunikationskanal angefordert werden können. Somit muss nur ein Minimum an Dienstinformationen mit den Informationssignalen übertragen werden.

Ein weiterer jedoch nicht mehr mit den erteilten Ansprüchen beanspruchter Vorteil, besteht darin, dass in der Auswerteeinheit der mindestens einen Teilnehmerstation geprüft wird, ob die Zugriffsberechtigungsdaten eine Auswerteinformation umfassen, die angibt, ob die Zugriffsberechtigungsdaten entweder einen Zugriffsschwellwert oder Zugriffsklasseninformationen umfassen, und dass die Zugriffsberechtigungsdaten entsprechend dem Prüfergebnis in der mindestens einen Teilnehmerstation ausgewertet werden. Auf diese Weise kann die für die Übertragung der Informationssignale erforderliche Übertragungskapazität weiter reduziert werden, in dem die Zugriffsberechtigungsinformationen entweder nur den Zugriffsschwellwert oder nur die Zugriffsklasseninformationen, jedoch nicht beides zusammen umfassen.

Ein weiterer Vorteil, besteht darin, dass der Zugriff auf diesen Telekommunikationskanal der mindestens einen Teilnehmerstation in Abhängigkeit des Nachrichtenverkehrsaufkommens auf mindestens einem Telekommunikationskanal freigegeben wird. Auf diese Weise lässt sich eine optimale Verteilung der Ressourcen des Telekommunikationsnetzes auf die Teilnehmerstationen bei bestmöglicher Nutzung der Übertragungskapazität erzielen.

### Zeichnung

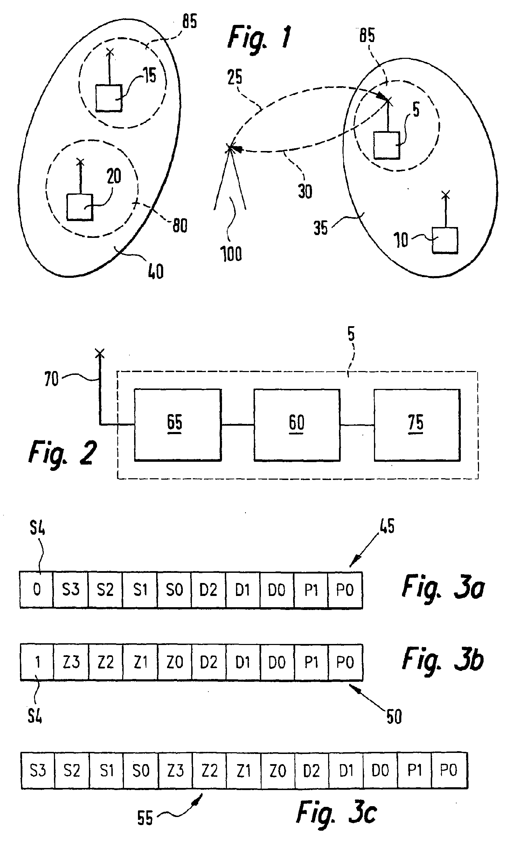

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz,
Figur 2 ein Blockschaltbild einer erfindungsgemäßen Teilnehmerstation,
Figur 2a ein erstes Bitmuster für die Zuteilung des Zugriffs auf einen Telekommunikationskanal,
Figur 3b ein zweites Bitmuster für die Zuteilung des Zugriffs auf einen Telekommunikationskanal,
Figur 3c ein drittes Bitmuster für die Zuteilung des Zugriffs auf einen Telekommunikationskanal, und Die Figuren 4a, 4b und 4c einen Ablaufplan für die Funktionsweise einer Auswerteeinheit der erfindungsgemäßen Teilnehmerstation.

### Beschreibung der Ausführungsbeispiele

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordern. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, dass die Nachricht einer Mobilstation auf dem RACH 30 mit einer anderen Nachricht kollidiert, findet kein ordnungsgemäßer Empfang dieser Nachricht in der Basisstation 100 statt, so dass die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, dass der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfasst. Weiterhin ist eine zweite Nutzerklasse 40 vorgesehen, die die dritte Mobilstation 15 und die vierte Mobilstation 20 umfasst. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet, dass den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist. Bei den möglichen Zugriffszwecken handelt es sich dabei beispielsweise um die bereits oben beschriebenen Fälle, wie das Versenden kleiner Datenpakete, die Kanalanforderung für größere Paketdaten und die **Kanalanforderung** für **Sprach**-/Datendienste. Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen. Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so dass alle Mobilstationen die gleichen Informationen zur gleichen Zeit erhalten, gesendet wird, um diesen die ihnen zugeteilten RACH-Zugriffsrechte mitzuteilen, umfasst das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfasst dabei eine Sende-/Emfpangseinheit 65 mit einer Sende-/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende-/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder Pseudozufallszahl R und prüft, ob die Zufalls- oder Pseudozufallszahl R mindestens so gross wie der Zugriffsschwellwert S ist. Nur dann ist ein Zugriff auf den RACH 30 erlaubt. Dabei gilt beispielsweise, dass der Zugriffsschwellwert S aus dem Intervall {0,1...n+1} und die Zufalls- oder Pseudozufallszahl R aus dem Intervall {0,1...n} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall {0,1,...n} gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist. Das zweite Bit ist dann ein erstes Zugriffsschwellwert-Bit S3, dass dritte Bit ein zweites Zugriffsschwellwert-Bit S2, dass vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2<4> = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, dass heißt verändert bzw. angepasst werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Telekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, dass ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, dass auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, dass die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, dass das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0. Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, dass heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, dass diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, dass die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel wird in Fig 3c ein drittes Bitmuster 55 mit den Informationssignalen von der Basisstation 100 zu den Mobilstationen 5,10,15,20 übertragen, dass eine Bitlänge von 13 Bit aufweist. Das dritte Bitmuster 55 weist kein Auswertebit S4 auf und umfasst daher sowohl die Zugriffsschwellwert-Bits S3,S2,S1,S0 als auch die Zugriffsklassenbits Z3,Z2,Z1,Z0. Zusätzlich umfasst das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörigen Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, dass eine Zugriffsschwelle S = 8 gewählt wurde, dass die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, dass die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, dass neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

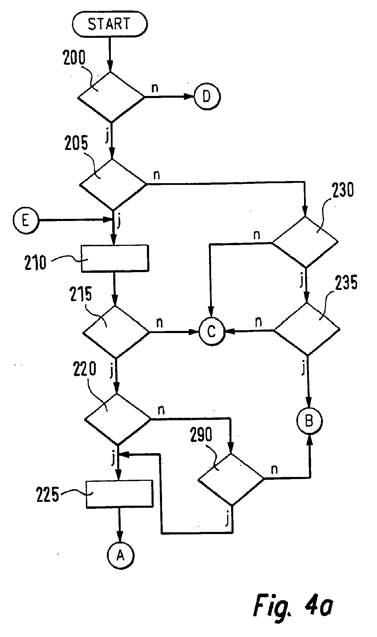

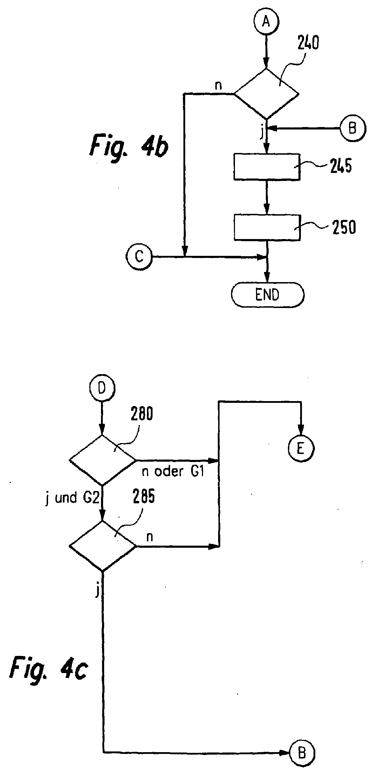

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschwellwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, dass ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, dass auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt. In allen Fällen, in denen das Programm nicht ausgehend vom Programmpunkt 250 verlassen wird, wird von der Auswerteeinheit 60 keine Zugriffserlaubnis auf den RACH 30 für die zugeordnete Mobilstation 5 ermittelt. Nach der Beendigung des Programms teilt die Mobilstation dem Benutzer mit, dass der Zugriff auf den RACH 30 nicht möglich war und erwartet weitere Eingaben des Benutzers. Alternativ dazu wird durch eine in der Mobilstation realisierte Warteschleife das Programm neu durchlaufen, so dass das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so dass Zugriff auf den RACH in der Regel zu verschiedenen Zeiten mittels entsprechend veränderter Bitmusterbelegung den verschiedenen Mobilstationen 5,10,15,20 zugeteilt wird.

Eine Entlastung des RACH 30 kann zusätzlich dadurch erzielt werden, dass ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, dass für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, dass die Zufallszahl oder die Pseudozufallszahl R kleiner als der Prioritätsschwellwert P ist.

## Patentansprüche

1. Verfahren zum Ermitteln einer Zugriffsberechtigung auf mindestens einen Telekommunikationskanal (30) eines Telekommunikationsnetzes durch eine Teilnehmerstation (5, 10, 15, 20), wobei durch eine Basisstation (100) versendete Informationssignale mit Zugriffsschwellwert- und Zugriffsklasseninformationen als Zugriffsberechtigungsdaten (55) von einer Sende-/Empfangseinheit (65) der Teilnehmerstation (5, 10, 15, 20) empfangen werden, **dadurch gekennzeichnet, dass** in einer Auswerteeinheit (60) der Teilnehmerstation (5, 10, 15, 20) geprüft wird (280), ob auf einer Zugangsberechtigungskarte (75) der Teilnehmerstation (5, 10, 15, 20) eine Zugehörigkeit der Teilnehmerstation (5, 10, 15, 20) zu einer bevorrechtigten Nutzerklasse (35, 40) gespeichert ist, ist dem so, prüft (285) die Auswerteeinheit (60) anhand der Zugriffsklasseninformationen (Z0, Z1, Z2, Z3), ob die für die Teilnehmerstation (5, 10, 15, 20) ermittelte bevorrechtigte Nutzerklasse (35, 40) für den Zugriff auf den mindestens einen Telekommunikationskanal (30) unabhängig von einer Zugriffsschwellwertauswertung berechtigt ist, ist dies nicht der Fall oder ist auf der Zugangsberechtigungskarte (75) keine Zugehörigkeit zu einer bevorrechtigten Nutzerklasse (35, 40) gespeichert, führt die Auswerteeinheit (60) die Zugriffsschwellwertauswertung mit folgenden Schritten durch:
(i) ermittelt aus den Zugriffsberechtigungsdaten (55) einen Zugriffsschwellwert (S),
(ii) zieht eine Zufalls- oder Pseudozufallszahl (R),
(iii) vergleicht den Zugriffsschwellwert (S) mit der Zufalls- oder Pseudozufallszahl (R), und
(iv) teilt ein Zugriffsrecht auf den mindestens einen Telekommunikationskanal (30) der Teilnehmerstation (5, 10, 15, 20) in Abhängigkeit des Vergleichsergebnisses zu.

2. Verfahren nach Anspruch 1, wobei die Zugriffsberechtigungsdaten (55) als Bitmuster (55) übertragen werden.

3. Verfahren nach Anspruch 1 oder 2, wobei die Zugriffsklasseninformationen (Z0, Z1, Z2, Z3) Zugriffsklassenbits (Z0, Z1, Z2, Z3) aufweisen.

4. Verfahren nach einem der vorhergehenden Ansprüche, **dadurch gekennzeichnet, dass** die Zugriffsklasseninformationen (Z0, Z1, Z2, Z3) mindestens vier Zugriffsklassenbits (Z0, Z1, Z2, Z3) aufweisen, welche jeweils eine Berechtigung einer der bevorrechtigten Nutzerklassen (35, 40) für den Zugriff auf den mindestens einen Telekommunikationskanal (30) anzeigen.

5. Verfahren nach einem der vorhergehenden Ansprüche, **dadurch gekennzeichnet, dass** der Zugriffsschwellwert (S) bezüglich der gezogenen Zufalls- oder Pseudozufallszahl (R) derart gewählt wird, dass der Zugriff auf den mindestens einen Telekommunikationskanal (30) für nicht bevorrechtigte Nutzerklassen (35, 40) verhindert wird.

6. Verfahren nach einem der vorhergehenden Ansprüche, **dadurch gekennzeichnet, dass** die Zugriffsberechtigungsdaten einen von sechszehn möglichen Zugriffsschwellwerte übertragen.

7. Verfahren nach einem der vorhergehenden Ansprüche, **dadurch gekennzeichnet, dass** die Informationssignale zu vorgegebenen Zeiten übertragen werden.

8. Verfahren nach Anspruch 7, **dadurch gekennzeichnet, dass** die Informationssignale in regelmäßigen Abständen übertragen werden.

9. Verfahren nach einem der vorhergehenden Ansprüche, **dadurch gekennzeichnet, dass** von der Basisstation (100) ein Wiederholungszähler und/oder ein Wiederholungsabstand zusammen mit den zugeteilten Zugriffsrechten gesendet wird, wobei der Wiederholungszähler die maximale Anzahl von erlaubten Wiederholversuchen für ein wiederholtes Absenden einer Nachricht von der Teilnehmerstation (5, 10, 15, 20) über den Telekommunikationskanal für den Fall einer Kollision mit einer Nachricht einer anderen Teilnehmerstation (5, 10, 15, 20) angibt und der Wiederholungsabstand ein stochastisches Maß für einen zeitlichen Abstand bis zu einer nächsten Wiederholung der Nachricht angibt.

10. Verfahren nach einem der vorhergehenden Ansprüche, **dadurch gekennzeichnet, dass** der mindestens eine Telekommunikationskanal (30) als ein wahlfreier Zugriffskanal, Random Access Channel, RACH, ausgebildet ist.

11. Verfahren nach einem der vorhergehenden Ansprüche, **dadurch gekennzeichnet, dass** der Zugriff auf den mindestens einen Telekommunikationskanal (30) nur für bestimmte Nutzerklassen (35, 40) von Teilnehmerstationen (5, 10, 15, 20) vorübergehend oder dauerhaft bevorrechtigt erlaubt wird.

12. Teilnehmerstation (5, 10, 15, 20), der eine Zugriffsberechtigung auf mindestens einen Telekommunikationskanal (30) eines Telekommunikationsnetzes erteilbar ist,
wobei die Teilnehmerstation (5, 10, 15, 20) aufweist
Mittel zum Empfangen von durch eine Basisstation (100) versendete Informationssignale mit Zugriffsschwellwert- und Zugriffsklasseninformationen als Zugriffsberechtigungsdaten (55); eine Auswerteeinheit (60), welche eingerichtet ist,
zum Prüfen, ob auf einer Zugangsberechtigungskarte (75) der Teilnehmerstation (5, 10, 15, 20) eine Zugehörigkeit der Teilnehmerstation (5, 10, 15, 20) zu einer bevorrechtigten Nutzerklasse (35, 40) gespeichert ist, ist dem so, zum Prüfen (285) anhand der Zugriffsklasseninformationen (Z0, Z1, Z2, Z3), ob die für die Teilnehmerstation (5, 10, 15, 20) ermittelte bevorrechtigte Nutzerklasse (35, 40) für den Zugriff auf den mindestens einen Telekommunikationskanal (30) unabhängig von einer Zugriffsschwellwertauswertung berechtigt ist, ist dies nicht der Fall oder ist auf der Zugangsberechtigungskarte (75) keine Zugehörigkeit zu einer bevorrechtigten Nutzerklasse (35, 40) gespeichert, zum Durchführen folgender Zugriffsschwellwertauswertung:
(i) Ermitteln eines Zugriffsschwellwerts (S) aus den Zugriffsberechtigungsdaten (55),
(ii) Ziehen einer Zufalls- oder Pseudozufallszahl (R),
(iii) Vergleichen der Zugriffsschwellwert (S) mit der Zufalls- oder Pseudozufallszahl (R), und
(iv) Zuteilen eines Zugriffsrechts auf den Telekommunikationskanal (30) der Teilnehmerstation (5, 10, 15, 20) in Abhängigkeit des Vergleichsergebnisses.

13. Telekommunikationssystem, aufweisend
ein als Mobilfunknetz ausgebildetes Telekommunikationsnetz, welches mindestens einen Telekommunikationskanal (30) bereitstellt, mindestens eine Basisstation (100), die eingerichtet ist, Informationssignale mit Zugriffsschwellwert- und Zugriffsklasseninformationen als Zugriffsberechtigungsdaten (55) zu versenden, und
mindestens eine Teilnehmerstation (5, 10, 15, 20) gemäß Anspruch 12.

## Claims

1. Method for ascertaining an authorization for access to at least one telecommunication channel (30) of a telecommunication network by a subscriber station (5, 10, 15, 20),
wherein information signals sent by a base station (100) with access threshold value and access class information as access authorization data (55) are received by a transmission/reception unit (65) of the subscriber station (5, 10, 15, 20) **characterized in that**
an evaluation unit (60) of the subscriber station (5, 10, 15, 20) has a check (280) performed in it to determine whether an access authorization card (75) of the subscriber station (5, 10, 15, 20) stores an association between the subscriber station (5, 10, 15, 20) and a privileged user class (35, 40),
if this is the case, then the evaluation unit (60) takes the access class information (Z0, Z1, Z2, Z3) as a basis for checking (285) whether the privileged user class (35, 40) ascertained for the subscriber station (5, 10, 15, 20) is authorized for access to the at least one telecommunication channel (30) irrespective of an access threshold value evaluation,
if this is not the case or if the access authorization card (75) stores no association with a privileged user class (35, 40),
then the evaluation unit (60) performs the access threshold value evaluation with the following steps:
(i) ascertains an access threshold value (S) from the access authorization data (55),
(ii) draws a random or pseudo-random number (R),
(iii)compares the access threshold value (S) with the random or pseudo-random number (R), and
(iv) allocates an access right for the at least one telecommunication channel (30) to the subscriber station (5, 10, 15, 20) on the basis of the comparison result.

2. Method according to Claim 1, wherein the access authorization data (55) are transmitted as bit patterns (55).

3. Method according to Claim 1 or 2, wherein the access class information (Z0, Z1, Z2, Z3) has access class bits (Z0, Z1, Z2, Z3).

4. Method according to one of the preceding claims, **characterized in that** the access class information (Z0, Z1, Z2, Z3) has at least four access class bits (Z0 Z1, Z2, Z3) that each indicate an authorization of one of the privileged user classes (35, 40) for access to the at least one telecommunication channel (30).

5. Method according to one of the preceding claims, **characterized in that** the access threshold value (S) is chosen with respect to the drawn random or pseudo-random number (R) such that access to the at least one telecommunication channel (30) is prevented for unprivileged user classes (35, 40).

6. Method according to one of the preceding claims, **characterized in that** the access authorization data transmit one of sixteen possible access threshold values.

7. Method according to one of the preceding claims, **characterized in that** the information signals are transmitted at prescribed times.

8. Method according to Claim 7, **characterized in that** the information signals are transmitted at regular intervals.

9. Method according to one of the preceding claims, **characterized in that** the base station (100) sends a repetition counter and/or a repetition interval together with the allocated access rights, wherein the repetition counter specifies the maximum number of permitted repetition attempts for repeated sending of a message by the subscriber station (5, 10, 15, 20) via the telecommunication channel in the event of a collision with a message from another subscriber station (5, 10, 15, 20), and the repetition interval species a stochastic measure of an interval of time before a next repetition of the message.

10. Method according to one of the preceding claims, **characterized in that** the at least one telecommunication channel (30) is in the form of a random access channel RACH.

11. Method according to one of the preceding claims, **characterized in that** access to the at least one telecommunication channel (30) is permitted on a temporarily or permanently privileged basis only for particular user classes (35, 40) of subscriber stations (5, 10, 15, 20).

12. Subscriber station (5, 10, 15, 20) that can be granted an authorization for access to at least one telecommunication channel (30) of a telecommunication network,
wherein the subscriber station (5, 10, 15, 20) has means for receiving information signals sent by a base station (100) with access threshold value and access class information as access authorization data (55);
an evaluation unit (60) that is set up to check whether an access authorization card (75) of the subscriber station (5, 10, 15, 20) stores an association between the subscriber station (5, 10, 15, 20) and a privileged user class (35, 40), if this is the case, to take the access class information (Z0, Z1 Z2, Z3) as a basis for checking (285) whether the privileged user class (35, 40) ascertained for the subscriber station (5, 10, 15, 20) is authorised for access to the at least one telecommunication channel (30) irrespective of an access threshold value evaluation,
if this is not the case or if the access authorization card (75) stores no association with a privileged user class (35, 40),
to perform the following access threshold value evaluation:
(i) ascertain an access threshold value (S) from the access authorization data (55),
(ii) draw a random or pseudo-random number (R),
(iii) compare the access threshold value (S) with the random or pseudo-random number (R), and
(iv) allocate an access right for the telecommunication channel (30) to the subscriber station (5, 10, 15, 20) on the basis of the comparison result.

13. Telecommunication system having a telecommunication network that is in the form of a mobile radio network and that provides at least one telecommunication channel (30),
at least one base station (100) that is set up to send information signals with access threshold value and access class information as access authorization data (55), and
at least one subscriber station (5, 10, 15, 20) according to Claim 12.

## Revendications

1. Procédé destiné à déterminer un droit d'accès à au moins un canal de télécommunication (30) d'un réseau de télécommunication pour un poste d'usagers (5, 10, 15, 20),
des signaux d'informations envoyés par un poste de base (100) avec des informations de valeurs seuils d'accès et des informations de classes d'accès en tant que données de droits d'accès (55) étant réceptionnés par une unité émettrice/réceptrice (65) du poste d'usagers (5, 10, 15, 20),
**caractérisé en ce que**
dans une unité d'évaluation (60) du poste d'usagers (5, 10, 15, 20), il est vérifié (280) si sur une carte (75) de droits d'accès du poste d'usagers (5, 10, 15, 20), il est mémorisé une appartenance du poste d'usagers (5, 10, 15, 20) à une classe d'usagers (35, 40) privilégiée,
dans l'affirmative, à l'aide des informations de classes d'accès (Z0, Z1, Z2, Z3), l'unité d'évaluation (60) vérifie (285) si la classe d'usagers (35, 40) privilégiée déterminée pour le poste d'usagers (5, 10, 15, 20) est autorisée à l'accès à l'au moins un canal de télécommunication (30), indépendamment d'une évaluation de la valeur seuil d'accès,
si ce n'est pas le cas ou si sur la carte de droits d'accès (75), il n'est mémorisé aucune appartenance à une classe d'usagers (35, 40) privilégiée,
l'unité d'évaluation (60) procède à l'évaluation de la valeur seuil d'accès, avec les étapes suivantes :
(i) elle détermine, à partir des données de droit d'accès (55) une valeur seuil d'accès (S),
(ii) elle déduit un nombre aléatoire ou un nombre pseudo-aléatoire (R),
(iii) elle compare la valeur seuil d'accès (S) avec le nombre aléatoire ou le nombre pseudo-aléatoire (R) et
(iv) en fonction du résultat de la comparaison, elle attribue au poste d'usagers (5, 10, 15, 20) un droit d'accès à l'au moins canal de télécommunication (30) .

2. Procédé selon la revendication 1, les données de droit d'accès (55) étant transmises sous forme de configuration binaire (55).

3. Procédé selon la revendication 1 ou 2, les informations de classes d'accès (Z0, Z1, Z2, Z3) comportant des bits de classes d'accès (Z0, Z1, Z2, Z3).

4. Procédé selon l'une quelconque des revendications précédentes, **caractérisé en ce que** les informations de classes d'accès (Z0, Z1, Z2, Z3) comportent au moins quatre bits de classes d'accès (Z0, Z1, Z2, Z3) qui indiquent chacun une autorisation de l'une des classes d'usagers (35, 40) privilégiée pour l'accès à l'au moins un canal de télécommunication (30).

5. Procédé selon l'une quelconque des revendications précédentes, **caractérisé en ce qu'**en ce qui concerne le nombre aléatoire ou le nombre pseudo-aléatoire (R) déduit, la valeur seuil d'accès (S) est choisie de telle sorte que l'accès à l'au moins un canal de télécommunication (30) est empêché à des classes d'usagers (35, 40) non privilégiées.

6. Procédé selon l'une quelconque des revendications précédentes, **caractérisé en ce que** les données de droits d'accès transmettent l'une parmi seize valeurs seuils d'accès possibles.

7. Procédé selon l'une quelconque des revendications précédentes, **caractérisé en ce que** les signaux d'informations sont transmis à des heures prédéfinies.

8. Procédé selon la revendication 7, **caractérisé en ce que** les signaux d'informations sont transmis à des intervalles réguliers.

9. Procédé selon l'une quelconque des revendications précédentes, **caractérisé en ce que** par le poste de base (100), il est envoyé un compteur d'itérations et/ou un intervalle d'itérations, ensemble avec les droits d'accès attribués, le compteur d'itérations indiquant le nombre maximal d'essais d'itérations permis pour un envoi réitéré d'un message du poste d'usagers (5, 10, 15, 20) via le canal de télécommunication pour le cas d'une collision avec un message d'un autre poste d'usagers (5, 10, 15, 20) et l'intervalle d'itérations indiquant une dimension stochastique pour un intervalle temporaire jusqu'à une prochaine itération du message.

10. Procédé selon l'une quelconque des revendications précédentes, **caractérisé en ce que** l'au moins un canal de télécommunication (30) est conçu sous la forme d'un canal d'accès aléatoire, Random Access Channel, RACH.

11. Procédé selon l'une quelconque des revendications précédentes, **caractérisé en ce que** l'accès à l'au moins un canal de télécommunication (30) n'est permis qu'à certaines classes d'usagers (35, 40) de postes d'usagers (5, 10, 15, 20), de façon passagèrement ou durablement privilégiée.

12. Poste d'usagers (5, 10, 15, 20) auquel un droit d'accès à au moins un canal de télécommunication (30) d'un réseau de télécommunication est attribuable,
le poste d'usagers (5, 10, 15, 20) comportant des moyens destinés à réceptionner des signaux d'informations envoyés par un poste de base (100) avec des informations de valeurs seuils d'accès et des informations de classes d'accès en tant que données de droit d'accès (55) ;
une unité d'évaluation (60), laquelle est installée
pour vérifier si sur une carte de droits d'accès (75) du poste d'usagers (5, 10, 15, 20), il est mémorisé une appartenance du poste d'usagers (5, 10, 15, 20) à une classe d'usagers (35, 40) privilégiée,
dans l'affirmative, pour vérifier (285) à l'aide des informations de classes d'accès (Z0, Z1, Z2, Z3) si la classe d'usagers (35, 40) privilégiée déterminée pour le poste d'usagers (5, 10, 15, 20) est autorisée à l'accès à l'au moins un canal de télécommunication (30), indépendamment d'une évaluation de la valeur seuil d'accès,
si ce n'est pas le cas ou si sur la carte de droits d'accès (75), il n'est mémorisé aucune appartenance à une classe d'usagers (35, 40) privilégiée,
pour procéder à l'évaluation suivante de la valeur seuil d'accès:
(i) la détermination, à partir des données de droits d'accès (55) d'une valeur seuil d'accès (S),
(ii) la déduction d'un nombre aléatoire ou d'un nombre pseudo-aléatoire (R),
(iii) la comparaison de la valeur seuil d'accès (S) avec le nombre aléatoire ou le nombre pseudo-aléatoire (R) et
(iv) en fonction du résultat de la comparaison, l'attribution au poste d'usagers (5, 10, 15, 20) d'un droit d'accès au canal de télécommunication (30) .

13. Système de télécommunication, comportant
un réseau de télécommunication conçu sous la forme d'un réseau de téléphonie mobile, lequel met à disposition au moins un canal de télécommunication (30) ,
au moins un poste de base (100) qui est installé
pour envoyer des signaux d'informations avec des informations de valeurs seuils d'accès et des informations de classes d'accès en tant que données de droits d'accès (55) et
au moins un poste d'usagers (5, 10, 15, 20) selon la revendication 12.
